# EUROPEAN PATENT SPECIFICATION

(11) **EP 2 902 508 B1**
(45) Date of publication and mention of the grant of the patent: **05.04.2017**
(21) Application number: 12885788.5
(22) Date of filing: 27.09.2012
(51) Int. Cl.: C21D 8/12, C22C 38/00, C22C 38/60, H01F 1/16, C22C 38/02, C22C 38/04, C22C 38/06, H01F 1/18, C21D 6/00, C21D 8/02, C21D 9/46, C22C 38/08, C22C 38/12, C22C 38/14, C22C 38/16, C22C 38/34, H01F 1/147, H01F 41/02

(54) **METHOD FOR PRODUCING GRAIN-ORIENTED ELECTRICAL STEEL SHEET**
VERFAHREN ZUR HERSTELLUNG EINES KORNORIENTIERTEN ELEKTRISCHEN STAHLBLECHS
PROCÉDÉ POUR LA PRODUCTION DE TÔLE D'ACIER ÉLECTRIQUE À GRAINS ORIENTÉS

(43) Date of publication of application: 05.08.2015
(73) Proprietor: JFE Steel Corporation, Tokyo, 100-0011 (JP)
(72) Inventor: SENDA, Kunihiro, Tokyo 100-0011 (JP); WATANABE, Makoto, Tokyo 100-0011 (JP); SHINGAKI, Yukihiro, Tokyo 100-0011 (JP); OMURA, Takeshi, Tokyo 100-0011 (JP)
(74) Representative: Stebbing, Timothy Charles
(86) International application number: PCT/JP2012/074858
(87) International publication number: WO 2014/049770

(56) References cited:
- EP-A1- 2 757 165
- EP-A1- 2 770 075
- JP-A- H0 762 436
- JP-A- 2000 144 249
- JP-A- 2000 355 717
- JP-A- 2003 253 341
- JP-A- 2008 001 977
- JP-A- 2010 236 013
- JP-A- 2012 207 278

## Description

This invention relates to a method for producing a grain-oriented electrical steel sheet, and more particularly to a method for producing a grain-oriented electrical steel sheet having an excellent iron loss property over a full length of a product coil.

### RELATED ART

The electrical steel sheet is roughly divided into a grain-oriented electrical steel sheet and a non-oriented electrical steel sheet and widely used as a core material for a transformer, an electric generator or the like. Especially, the grain-oriented electrical steel sheet has magnetic properties effective for decreasing energy loss in the transformer or the electric generator because crystal orientation thereof is highly accumulated into {110}<001> orientation called as Goss orientation. As a technique for further decreasing the iron loss of the grain-oriented electrical steel sheet has hitherto been known a method of decreasing a sheet thickness, increasing Si content, improving crystal orientation, applying tension to a steel sheet, smoothening a steel sheet surface, refining secondary recrystallized grains or the like.

As the technique of refining the secondary recrystallized grains among the above techniques for decreasing the iron loss, there is known a method of performing rapid heating during decarburization annealing or just before decarburization annealing to improve primary recrystallization texture. For example, Patent Document 1 discloses a technique of obtaining a grain-oriented electrical steel sheet with a low iron loss wherein a strip rolled to a final thickness is rapidly heated to 800∼950°C in an atmosphere having an oxygen concentration of not more than 500 ppm at a heating rate of not less than 100°C/s before decarburization annealing and then subjected to decarburization annealing under conditions that a temperature in a front zone of decarburization annealing step is 775∼840°C which is lower than the attainable temperature by the rapid heating and a temperature in a subsequent rear zone is 815∼875°C which is higher than the temperature in the front zone. Patent Document 2 discloses a technique of obtaining a grain-oriented electrical steel sheet with a low iron loss wherein a strip rolled to a final thickness is heated to a temperature of not lower than 700°C in a non-oxidizing atmosphere having P_{H2O}/P_{H2} of not more than 0.2 at a heating rate of not less than 100°C/s just before decarburization annealing.

Further, Patent Document 3 discloses a technique of obtaining an electrical steel sheet with excellent coating property and magnetic properties wherein a temperature zone of at least not lower than 600°C at a heating stage of decarburization annealing step is heated to not lower than 800°C at a heating rate of not less than 95°C/s and an atmosphere at this temperature zone is constituted with an inert gas containing an oxygen of 10⁻⁶∼10⁻¹ as a volume fraction, and a constituent of an atmosphere during soaking for decarburization annealing is H₂ and H₂O or H₂, H₂O and an inert gas, and a ratio P_{H2O}/P_{H2} of H₂O partial pressure to H₂ partial pressure is 0.05∼0.75, and a flow rate of the atmosphere per unit area is in a range of 0.01 Nm³/min • m² to 1 Nm³/min • m². Patent Document 4 discloses a technique of obtaining an electrical steel sheet with excellent coating property and magnetic properties wherein a temperature zone of at least not lower than 650°C at a heating stage of decarburization annealing step is heated to not lower than 800°C at a heating rate of not less than 100°C/s and an atmosphere at this temperature zone is constituted with an inert gas containing an oxygen of 10⁻⁶∼10⁻² as a volume fraction, and a constituent of an atmosphere during soaking for decarburization annealing is H₂ and H₂O or H₂, H₂O and an inert gas, and a ratio P_{H2O}/P_{H2} of H₂O partial pressure to H₂ partial pressure is 0.15∼0.65. Furthermore, Patent Documents 5 and 6 disclose manufacturing methods of grain-oriented steel sheets.
Patent Document 1: JP-A-H10-298653
Patent Document 2: JP-A-H07-062436
Patent Document 3: JP-A-2003-027194
Patent Document 4: JP-A-2000-204450
Patent Document 5: JP-A-2003-253341
Patent Document 6: JP-A-2010-236013

### TASK TO BE SOLVED BY THE INVENTION

By applying the techniques disclosed in Patent Documents 1∼4 are relatively refined secondary recrystallized grains, whereby the decrease of the iron loss can be attempted. In the above conventional techniques, however, the scattering of the refining effect in a product coil is caused by variation of ingredients in raw material, variation of production conditions at steps prior to primary recrystallization annealing and so on and hence there is a problem that it is difficult to stably obtain the effect of decreasing the iron loss over the full length of the product coil.

The invention is made in view of the above problems inherent to the conventional techniques and is to propose an advantageous method for producing a grain-oriented electrical steel sheet wherein secondary recrystallized grains can be stably refined over a full length of a product coil to attain the decrease of iron loss over the full length of the coil.

### SOLUTION FOR TASK

The inventors have noted heating process in primary recrystallization annealing and pursued a technique of stably refining secondary recrystallized grains over a full length of a product coil. Consequently, it has been found effective that a heating process in primary recrystallization annealing is divided into a low temperature zone and a high temperature zone and rapid heating is conducted at the low temperature zone on one hand and a heating rate at the high temperature zone is slacked on the other hand. That is, although it has hitherto been known to refine the secondary recrystallized grains by increasing a heating rate for primary recrystallization, the inventors have made further studies and found that in the heating process of the primary recrystallization annealing, a heating rate of a low temperature zone causing recovery is made higher than the heating rate of the usual decarburization annealing, while a heating rate of a high temperature zone causing primary recrystallization is made to not more than 50% of the heating rate of the low temperature zone, whereby the secondary recrystallized grains can be stably refined over a full length of a product coil even if raw material components and production condition in the previous step are varied, and as a result the invention has been accomplished.

That is, the invention lies according to claim 1 in a method for producing a grain-oriented electrical steel sheet by hot rolling a steel slab with a chemical composition consisting of C: 0.001∼0.20 mass%, Si: 1.0∼5.0 mass%, Mn: 0.03∼1.0 mass%, one or two of S and Se: 0.005∼0.040 mass% in total, sol. Al: 0.003∼0.050 mass%, N: 0.0010∼0.020 mass% and remainder being Fe and inevitable impurities, subjecting to a single cold rolling or two or more cold rollings with an intermediate annealing therebetween to a final thickness and to a primary recrystallization annealing, applying an annealing separator composed mainly of MgO and then subjecting to final annealing, characterized in that a heating rate S₁ at a zone of 500∼600°C in a heating process of the primary recrystallization annealing is not less than 100°C/s and a heating rate S₂ at a zone of 600∼700°C is in a range of 30 ∼ (0.5 x S₁)°C/s.

The production method of the grain-oriented electrical steel sheet is characterized in that an oxidation potential P_{H2O}/P_{H2} of an atmosphere at zone of 500∼700°C in the heating process of the primary recrystallization annealing is not more than 0.05.

Also, the production method of the grain-oriented electrical steel sheet is characterized by containing optionally one or more selected from Cu: 0.01∼0.5 mass%, Ni: 0.01∼1.0 mass%, Cr: 0.01∼1.0 mass%, Sb: 0.01∼0.3 mass%, Sn: 0.01∼1.0 mass%, Mo: 0.01∼1.0 mass% and Bi: 0.001∼0.5 mass% in addition to the above chemical composition.

Further, the production method of the grain-oriented electrical steel sheet is characterized by containing optionally one or more selected from B: 0.001∼0.01 mass%, Ge: 0.001∼0.1 mass%, As: 0.005∼0.1 mass%, P: 0.005∼0.1 mass%, Te: 0.005∼0.1 mass%, Nb: 0.005∼0.1 mass%, Ti: 0.005∼0.1 mass% and V: 0.005∼0.1 mass% in addition to the above chemical composition.

### EFFECT OF THE INVENTION

According to the invention, the secondary recrystallized grains can be refined over a full length of a product coil of the grain-oriented electrical steel sheet to decrease the iron loss, so that the yield of the product can be significantly increased, while the invention can largely contribute to the improvement of iron loss property in the transformer or the like.

### EMBODIMENTS FOR CARRYING OUT THE INVENTION

The chemical composition in the grain-oriented electrical steel sheet according to the invention will be described below.

### C: 0.001∼0.10 mass%.

C is an ingredient useful for generating grains of Goss orientation and is necessary to be contained in an amount of not less than 0.001 mass% for effectively developing the above action. However, when C content exceeds 0.10 mass%, poor decarburization is caused even if decarburization annealing is performed. Therefore, C content is in a range of 0.001∼0.10 mass%. Preferably, it is in a range of 0.01∼0.08 mass%.

### Si: 1.0∼5.0 mass%

Si is an ingredient required for not only enhancing electric resistance of steel to decrease the iron loss but also stabilizing BCC structure of steel (ferrite structure) to enable high-temperature heat treatment and is necessary to be added in an amount of at least 1.0 mass%. However, when it is added in an amount of more than 5.0 mass%, steel is hardened and it is difficult to perform cold rolling. Therefore, Si content is in a range of 1.0∼5.0 mass%. Preferably, it is in a range of 2.5∼4.0, mass%.

### Mn: 0.01∼1.0 mass%

Mn is an ingredient effective for improving hot workability of steel and is an ingredient useful for bonding with S or Se to form precipitates of MnS, MnSe and the like and act as a depressant (inhibitor). However, when Mn content is less than 0.01 mass%, the above effects are not obtained, while when it exceeds 1.0 mass%, precipitates of MnSe and the like are coarsened to lose the function as an inhibitor. Therefore, Mn content is in a range of 0.01∼1.0 mass%. Preferably, it is in a range of 0.04∼0.20 mass%.

### sol. Al: 0.003∼0.050 mass%

Al is an ingredient useful for forming AlN in steel to develop inhibitor action as a secondary dispersion phase. However, when the addition amount as sol. Al is less than 0.003 mass%, the amount of AlN precipitates cannot be ensured sufficiently and the above effect is not obtained, while when it exceeds 0.050 mass%, AlN is coarsened to lose the action as an inhibitor. Therefore, Al content is in a range of 0.003∼0.050 mass% as sol. Al. Preferably, it is in a range of 0.005∼0.040 mass%.

### N: 0.0010∼0.020 mass%

N is an ingredient required for forming AlN like Al. However, when the addition amount of N is less than 0.0010 mass%, AlN is not formed sufficiently and the above effect is not obtained, while when it exceeds 0.020 mass%, swelling or the like is generated during the heating of the slab to cause surface defects. Therefore, N content is in a range of 0.001∼0.020 mass%. Preferably, it is in a range of 0.0030∼0.015 mass%.

### One or more of S and Se: 0.005∼0.040 mass% in total

S and Se are ingredients useful for bonding with Mn or Cu to form MnSe, MnS, Cu₂₋ₓSe, Cu₂₋ₓS, which are precipitated in steel as a secondary dispersion phase to develop an action as an inhibitor. However, when the total amount of S and Se is less than 0.005 mass%, the addition effect is poor, while when it exceeds 0.040 mass%, solid solution becomes incomplete during the heating of the slab to cause surface defects. Even in the single addition or composite addition, therefore, the total addition amount is in a range of 0.005∼0.040 mass%. Preferably, it is in a range of 0.012∼0.030 mass%.

In the grain-oriented electrical steel sheet according to the invention, one or more selected from Cu: 0.01∼0.5 mass%, Ni: 0.01∼1.0 mass%, Cr: 0.01∼1.0 mass%, Sb: 0.01∼0.3 mass%, Sn: 0.01∼1.0 mass%, Mo: 0.01∼1.0 mass% and Bi: 0.001∼0.5 mass% can be added in addition to the above chemical composition.

These elements are apt to be segregated on crystal boundary or surface and act as an auxiliary inhibitor and are ingredients effective for attempting further improvement of magnetic properties. When the addition amount of each of the elements is less than the lower limit, the effect of suppressing coarsening of primary grains at a high temperature zone in the secondary recrystallization process is lacking and the sufficient addition effect is not obtained, while when it exceeds the upper limit, trouble of coating appearance or trouble of secondary recrystallization is easily caused. Therefore, when the above ingredients are added, the content is preferable to be in the above range.

Also, in the grain-oriented electrical steel sheet according to the invention, one or more selected from B: 0.001∼0.01 mass%, Ge: 0.001∼0.1 mass%, As: 0.005∼0.1 mass%, P: 0.005∼0.1 mass%, Te: 0.005∼0.1 mass%, Nb: 0.005∼0.1 mass%, Ti: 0.005∼0.1 mass% and V: 0.005∼0.1 mass% can be added in addition to the above chemical composition. By adding these elements within the above range can be more strengthened an inhibitor effect (depressing force) to more improve accumulation into Goss orientation to thereby obtain a high magnetic flux density stably.

The production method of the grain-oriented electrical steel sheet according to the invention will be described below.

The grain-oriented electrical steel sheet according to the invention can be produced by a method comprising a series of steps of melting a steel having the aforementioned chemical composition by the conventionally well-known refining process, shaping a raw steel material (steel slab) with a continuous casting method or an ingot making-blooming method, hot rolling the steel slab to form a hot rolled sheet, subjecting the hot rolled sheet to a hot band annealing if necessary and further to a single cold rolling or two or more cold rollings with an intermediate annealing therebetween to form a cold rolled sheet having a final thickness, subjecting the sheet to a primary recrystallization annealing, applying an annealing separator composed mainly of MgO, performing a final annealing, and if necessary, subjecting to a flattening annealing combined with coating and baking of an insulation film. In this case, production conditions in the steps other than the primary recrystallization annealing step are not particularly limited because the conventionally well-known conditions can be adopted.

The conditions of the primary recrystallization annealing after the final cold rolling will be described below.

The conditions of the primary recrystallization annealing, particularly heating rate in the heating process largely affects the secondary recrystallization structure as previously mentioned, and are necessary to be strictly controlled. In the invention, therefore, in order to stably refine the secondary recrystallized grains over a full length of a product coil to enhance a ratio of a zone being excellent in the iron loss property in the product coil, it is necessary that the heating process is divided into a low temperature zone promoting recovery and a high temperature zone causing primary recrystallization and a heating rate of each zone is controlled appropriately. Concretely, it is necessary that the heating rate S₁ at the low temperature zone (500∼600°C) causing recovery as a front stage of the primary recrystallization is made to not less than 100°C/s which is higher than that of the usual annealing, while the heating rate S₂ at the high temperature zone (600∼700°C) causing the primary recrystallization is made to not less than 30°C/s but not more than 50% of that of the low temperature zone. Thus, the effect of decreasing the iron loss can be stably obtained even if the chemical composition of steel or the production condition prior to the primary recrystallization annealing is varied.

The reason why the heating rate is limited to the above range will be described below.

It is known that the secondary recrystallization nucleus of Goss orientation {110}<001> is existent in a deformation zone produced in {111} fiber structure easily storing strain energy among the rolling structure. Moreover, the deformation zone means a region particularly storing strain energy in the {111} fiber structure.

Here, when the heating rate S₁ at the low temperature zone (500∼600°C) of the primary recrystallization annealing is less than 100°C/s, recovery (mitigation of strain energy) is preferentially generated in the deformation zone having a very high strain energy, so that recrystallization into Goss orientation {110}<001> cannot be promoted. On the contrary, when S₁ is made to not less than 100°C/s, the deformation structure can be carried to a high temperature zone at a state of a high strain energy, so that recrystallization of Goss orientation {110}<001> can be promoted at a relatively low temperature (close to 600°C). Therefore, the heating rate S₁ at the low temperature zone (500∼600°C) is not less than 100°C/s. Preferably, it is not less than 150°C/s.

Also, in order to control the grain size of secondary recrystallized Goss orientation {110}<001> to a target size, it is important to control a quantity of {111} structure encroached by Goss orientation {110}<001> to an adequate range. It is because as {111} orientation is too much, the growth of secondary recrystallized grains is easily promoted, so that even if Goss orientation {110}<001> is much, one structure is made enormous before the growth to form coarse grains, while as the orientation is too little, the growth of secondary recrystallized grains is hardly promoted and there is a fear of causing troubles of secondary recrystallization.

Also, {111} orientation is produced by recrystallization from {111} fiber structure having a high strain energy as compared to its circumference, which is not so high as that of the deformation zone, so that it is a crystal orientation easily causing recrystallization after Goss orientation {110}<001> in the heat cycle of heating up to 600°C at a heating rate S₁ of not less than 100°C/s according to the invention.

Therefore, when the heating up to a higher temperature (not lower than 700°C) generating primary recrystallization is performed at a higher heating rate exceeding 50% of the heating rate S₁, recrystallizations of Goss orientation {110}<001> and subsequent easily promotable {111} orientation are suppressed, and hence the texture after primary recrystallization is randomized. As a result, the number of recrystallized grains of Goss orientation {110}<041> is decreased to damage the effect of refining secondary recrystallized grains as compared to a case that a zone of 600∼700°C is heated at a rate lower than 50% of the heating rate S₁, or {111} orientation is decreased and secondary recrystallized grains are not grown sufficiently. Inversely, when the heating rate S₂ at a zone of 600∼700°C is made lower than 30°C/s, {111} orientation easily recrystallizing at the above temperature zone is increased and hence there is a fear of coarsening secondary recrystallized grains. Therefore, the heating rate S₂ at the high temperature zone (600∼700°C) causing primary recrystallization is not less than 30°C/s but not more than 50% of the heating rate S₁ at the low temperature zone. Preferably, it is not less than 35°C/s but not more than 40% of S₁.

In general, the primary recrystallization annealing is often performed in combination with decarburization annealing. Even in the invention, the primary recrystallization annealing may be combined with decarburization annealing. In this case, although the rapid heating may be performed in a decarburization atmosphere, a lower iron loss can be obtained stably in a lower oxidizing atmosphere. It is because when decarburization is caused in the heating process, primary recrystallization structure adverse for the refining of secondary recrystallized grains is formed. In the invention, therefore, the oxygen potential P_{H2O}/P_{H2} of the atmosphere at a zone of 500∼700°C in the heating process is preferable to be controlled to not more than 0.05. More preferably, it is not more than 0.035.

Moreover, the other conditions in the primary recrystallization annealing such as soaking temperature, soaking time, atmosphere during soaking, cooling rate and so on may be according to usual manner and are not particularly limited. If C content in the steel slab is not more than 30 massppm, it is not particularly required to conduct decarburization annealing, so that the usual primary recrystallization annealing may be performed after the final cold rolling.

### EXAMPLE 1

A steel slab containing C: 0.06 mass%, Si: 3.3 mass%, Mn: 0.08 mass%, S: 0.023 mass%, sol. Al: 0.03 mass%, N: 0.007 mass%, Cu: 0.2 mass% and Sb: 0.02 mass% is heated at 1430°C for 30 minutes and hot rolled to form a hot rolled sheet of 2.2 mm in thickness, which is subjected to a hot band annealing at 1000°C for 1 minute, cold rolled to an intermediate thickness of 1.5 mm, subjected to an intermediate annealing at 1100°C for 2 minutes and final cold rolling to form a cold rolled sheet of 0.23 mm in thickness. Thereafter, the sheet is subjected to primary recrystallization annealing combined with decarburization annealing by variously changing heating conditions (heating rate S₁ at a zone of 500∼600°C, heating rate S₂ at a zone of 600∼700°C and oxygen potential P_{H2O}/P_{H2} of atmosphere at a zone of 500∼700°C) as shown in Table 1 and keeping soaking temperature of 840°C for 2 minutes, coated on its steel sheet surface with an annealing separator of an aqueous slurry composed mainly of MgO and containing 10 mass% of TiO₂, dried, rewound into a coil, and subjected to final annealing and flattening annealing combined with application and baking of a phosphate series insulating tension coating and shape correction of steel band to obtain a product coil.

**Table 1**

| No. | Conditions of primary recrystallization annealing | | | | Ratio of W_{17/50}≤0.80 W/kg (%) |
|---|---|---|---|---|---|
| | P_{H2O}/P_{H2} at a zone of 500∼700°C | Heating rate(°C/s) | | | |
| | | S₁* | S₂* | S₂/S₁ | |
| 1 | 0.10 | 20 | 5 | 0.25 | 0 |
| 2 | | | 10 | 0.50 | 0 |
| 3 | | | 15 | 0.75 | 0 |
| 4 | | | 20 | 1.00 | 0 |
| 5 | 0.10 | 80 | 15 | 0.188 | 0 |
| 6 | | | 30 | 0.375 | 0 |
| 7 | | | 60 | 0.75 | 0 |
| 8 | | | 80 | 1.00 | 0 |
| 9 | 0.10 | 100 | 20 | 0.20 | 40 |
| 10 | | | 30 | 0.30 | 70 |
| 11 | | | 40 | 0.40 | 90 |
| 12 | | | 50 | 0.50 | 80 |
| 13 | | | 60 | 0.60 | 40 |
| 14 | | | 100 | 1.00 | 30 |
| 15 | 0.10 | 200 | 20 | 0.10 | 45 |
| 16 | | | 30 | 0.15 | 85 |
| 17 | | | 50 | 0.25 | 100 |
| 18 | | | 100 | 0.50 | 95 |
| 19 | | | 120 | 0.60 | 60 |
| 20 | | | 200 | 1.00 | 40 |
| 21 | 0.10 | 400 | 20 | 0.05 | 40 |
| 22 | | | 30 | 0.075 | 90 |
| 23 | | | 50 | 0.125 | 95 |
| 24 | | | 200 | 0.50 | 100 |
| 25 | | | 250 | 0.625 | 60 |
| 26 | | | 400 | 1.00 | 50 |
| 27 | 0.05 | 100 | 20 | 0.20 | 35 |
| 28 | | | 30 | 0.30 | 90 |
| 29 | | | 40 | 0.40 | 100 |
| 30 | | | 50 | 0.50 | 95 |
| 31 | | | 60 | 0.60 | 40 |
| 32 | | | 100 | 1.00 | 25 |
| 33 | 0.01 | 100 | 20 | 0.20 | 40 |
| 34 | | | 30 | 0.30 | 100 |
| 35 | | | 40 | 0.40 | 100 |
| 36 | | | 50 | 0.50 | 100 |
| 37 | | | 60 | 0.60 | 45 |
| 38 | | | 100 | 1.00 | 30 |

| | | | | | |
|---|---|---|---|---|---|
| *; S₁: heating rate at a zone of 500∼600°C S₂: heating rate at a zone of 600∼700°C | | | | | |

Specimens for Epstein test are taken out from 20 places in a longitudinal direction of the thus obtained product coil at equal intervals, and iron loss is measured over a full length of the coil to determine a ratio (%) of a portion having iron loss W_{17/50} of not more than 0.80 W/kg to the full length of the product coil.

The measured results are also shown in Table 1. As seen from the results, the steel sheets of all Invention Examples subjected to primary recrystallization annealing at heating rates adapted to the invention show that the ratio of the portion having W_{17/50}≤0.80 W/kg is not less than 70% of the full length of the coil and further that the ratio of low iron loss portion can be enhanced when oxygen potential P_{H2O}/P_{H2} of the atmosphere at a zone of 500∼700°C in the heating process is not more than 0.05.

### EXAMPLE 2

A steel slab having a chemical composition shown in Table 2 is heated at 1430°C for 30 minutes and hot rolled to form a hot rolled sheet of 2.2 mm in thickness, which is subjected to a hot band annealing at 1000°C for 1 minute, cold rolled to a thickness of 1.5 mm, subjected to an intermediate annealing at 1100°C for 2 minutes, cold rolled to form a cold rolled sheet of 0.23 mm in final thickness and subjected to electrolytic etching to form linear grooves for magnetic domain subdivision. Then, the cold rolled sheet is subjected to primary recrystallization annealing combined with decarburization annealing wherein a temperature is raised to 700°C under conditions that oxygen potential P_{H2O}/P_{H2} of an atmosphere at a zone of 500∼700°C in heating process is 0.03 and a heating rate S₁ at a zone of 500∼600°C is 200°C/s and a heating rate S₂ at a zone of 600∼700°C is 50°C/s and a zone of 700∼840°C is heated at an average heating rate of 10°C/s and 840°C is kept in an atmosphere of P_{H2O}/P_{H2} = 0.4 for 2 minutes, coated on its steel sheet surface with an annealing separator of an aqueous slurry composed mainly of MgO and containing 10 mass% of TiO₂, dried, rewound into a coil, and subjected to final annealing and flattenening annealing combined with application and baking of a phosphate series insulating tension coating and shape correction of steel band to obtain a product coil.

**Table 2-1**

| No. | Chemical composition (mass%) | | | | | | | | | Non-defective ratio* (%) | Remarks |
|---|---|---|---|---|---|---|---|---|---|---|---|
| | C | Si | Mn | S | Se | S+Se | sol.Al | N | Others | | |
| 1 | 0.0005 | 3.1 | 0.1 | 0.02 | - | 0.02 | 0.03 | 0.0100 | - | 10 | Comparative Example |
| 2 | 0.001 | 3.1 | 0.1 | 0.02 | - | 0.02 | 0.03 | 0.0100 | - | 70 | Invention Example |
| 3 | 0.10 | 3.1 | 0.1 | 0.02 | - | 0.02 | 0.03 | 0.0100 | - | 80 | Invention Example |
| 4 | 0.20 | 3.1 | 0.1 | 0.02 | - | 0.02 | 0.03 | 0.0100 | - | 75 | Invention Example |
| 5 | 0.30 | 3.1 | 0.1 | 0.02 | - | 0.02 | 0.03 | 0.0100 | - | 40 | Comparative Example |
| 6 | 0.10 | 0.5 | 0.1 | 0.02 | - | 0.02 | 0.03 | 0.0100 | - | 30 | Comparative Example |
| 7 | 0.10 | 1.0 | 0.1 | 0.02 | - | 0.02 | 0.03 | 0.0100 | - | 70 | Invention Example |
| 8 | 0.10 | 2.0 | 0.1 | 0.02 | - | 0.02 | 0.03 | 0.0100 | - | 80 | Invention Example |
| 9 | 0.10 | 3.1 | 0.1 | 0.02 | - | 0.02 | 0.03 | 0.0100 | - | 90 | Invention Example |
| 10 | 0.10 | 5.0 | 0.1 | 0.02 | - | 0.02 | 0.03 | 0.0100 | - | 95 | Invention Example |
| 11 | 0.10 | 7.0 | 0.1 | 0.02 | - | 0.02 | 0.03 | 0.0100 | - | 60 | Comparative Example |
| 12 | 0.10 | 3.1 | 0.02 | 0.02 | - | 0.02 | 0.03 | 0.0100 | - | 50 | Comparative Example |
| 13 | 0.10 | 3.1 | 0.03 | 0.02 | - | 0.02 | 0.03 | 0.0100 | - | 70 | Invention Example |
| 14 | 0.10 | 3.1 | 0.1 | 0.02 | - | 0.02 | 0.03 | 0.0100 | - | 80 | Invention Example |
| 15 | 0.10 | 3.1 | 0.5 | 0.02 | - | 0.02 | 0.03 | 0.0100 | - | 90 | Invention Example |
| 16 | 0.10 | 3.1 | 1.2 | 0.02 | - | 0.02 | 0.03 | 0.0100 | - | 65 | Comparative Example |
| 17 | 0.10 | 3.1 | 0.1 | - | 0.001 | 0.001 | 0.03 | 0.0100 | - | 55 | Comparative Example |
| 18 | 0.10 | 3.1 | 0.1 | - | 0.005 | 0.005 | 0.03 | 0.0100 | - | 70 | Invention Example |
| 19 | 0.10 | 3.1 | 0.1 | 0.002 | 0.003 | 0.005 | 0.03 | 0.0100 | - | 70 | Invention Example |
| 20 | 0.10 | 3.1 | 0.1 | 0.005 | 0.005 | 0.01 | 0.03 | 0.0100 | - | 75 | Invention Example |
| 21 | 0.10 | 3.1 | 0.1 | 0.01 | 0.01 | 0.02 | 0.03 | 0.0100 | - | 80 | Invention Example |
| 22 | 0.10 | 3.1 | 0.1 | 0.02 | 0.02 | 0.04 | 0.03 | 0.0100 | - | 90 | Invention Example |
| 23 | 0.10 | 3.1 | 0.1 | - | 0.04 | 0.04 | 0.03 | 0.0100 | - | 90 | Invention Example |
| 24 | 0.10 | 3.1 | 0.1 | 0.04 | 0.02 | 0.06 | 0.03 | 0.0100 | - | 65 | Comparative Example |
| 25 | 0.10 | 3.1 | 0.1 | 0.02 | - | 0.02 | 0.001 | 0.0100 | - | 65 | Comparative Example |
| 26 | 0.10 | 3.1 | 0.1 | 0.02 | - | 0.02 | 0.003 | 0.0100 | - | 75 | Invention Example |
| 27 | 0.10 | 3.1 | 0.1 | 0.02 | - | 0.02 | 0.01 | 0.0100 | - | 80 | Invention Example |
| 28 | 0.10 | 3.1 | 0.1 | 0.02 | - | 0.02 | 0.05 | 0.0100 | - | 90 | Invention Example |
| 29 | 0.10 | 3.1 | 0.1 | 0.02 | - | 0.02 | 0.08 | 0.0100 | - | 70 | Comparative Example |
| 30 | 0.10 | 3.1 | 0.1 | 0.02 | - | 0.02 | 0.03 | 0.0005 | - | 50 | Comparative Example |
| 31 | 0.10 | 3.1 | 0.1 | 0.02 | - | 0.02 | 0.03 | 0.0010 | - | 75 | Invention Example |
| 32 | 0.10 | 3.1 | 0.1 | 0.02 | - | 0.02 | 0.03 | 0.0050 | - | 85 | Invention Example |
| 33 | 0.10 | 3.1 | 0.1 | 0.02 | - | 0.02 | 0.03 | 0.0100 | - | 90 | Invention Example |
| 34 | 0.10 | 3.1 | 0.1 | 0.02 | - | 0.02 | 0.03 | 0.0200 | - | 100 | Invention Example |
| 35 | 0.10 | 3.1 | 0.1 | 0.02 | - | 0.02 | 0.03 | 0.0300 | - | 70 | Comparative Example |

| | | | | | | | | | | | |
|---|---|---|---|---|---|---|---|---|---|---|---|
| *: Non-defective ratio: ratio (%) of W_{17/50}≤0.80 W/kg in product coil | | | | | | | | | | | |

**Table 2-2**

| No. | Chemical composition (mass%) | | | | | | | | | Non-defective ratio* (%) | Remarks |
|---|---|---|---|---|---|---|---|---|---|---|---|
| | C | Si | Mn | S | Se | S + Se | sol.Al | N | Others | | |
| 36 | 0.10 | 3.1 | 0.1 | - | 0.02 | 0.02 | 0.03 | 0.0100 | Cu:0.005 | 80 | Invention Example |
| 37 | 0.10 | 3.1 | 0.1 | - | 0.02 | 0.02 | 0.03 | 0.0100 | Cu:0.01 | 100 | Invention Example |
| 38 | 0.10 | 3.1 | 0.1 | - | 0.02 | 0.02 | 0.03 | 0.0100 | Cu:0.20 | 100 | Invention Example |
| 39 | 0.10 | 3.1 | 0.1 | - | 0.02 | 0.02 | 0.03 | 0.0100 | Cu:0.30 | 90 | Invention Example |
| 40 | 0.10 | 3.1 | 0.1 | - | 0.02 | 0.02 | 0.03 | 0.0100 | Cr:0.005 | 85 | Invention Example |
| 41 | 0.10 | 3.1 | 0.1 | - | 0.02 | 0.02 | 0.03 | 0.0100 | Cr:0.01 | 100 | Invention Example |
| 42 | 0.10 | 3.1 | 0.1 | - | 0.02 | 0.02 | 0.03 | 0.0100 | Cr:0.50 | 100 | Invention Example |
| 43 | 0.10 | 3.1 | 0.1 | - | 0.02 | 0.02 | 0.03 | 0.0100 | Cr:0.80 | 90 | Invention Example |
| 44 | 0.10 | 3.1 | 0.1 | - | 0.02 | 0.02 | 0.03 | 0.0100 | Ni:0.005 | 85 | Invention Example |
| 45 | 0.10 | 3.1 | 0.1 | - | 0.02 | 0.02 | 0.03 | 0.0100 | Ni:0.01 | 100 | Invention Example |
| 46 | 0.10 | 3.1 | 0.1 | - | 0.02 | 0.02 | 0.03 | 0.0100 | Ni:0.50 | 100 | Invention Example |
| 47 | 0.10 | 3.1 | 0.1 | - | 0.02 | 0.02 | 0.03 | 0.0100 | Ni:0.80 | 90 | Invention Example |
| 48 | 0.10 | 3.1 | 0.1 | - | 0.02 | 0.02 | 0.03 | 0.0100 | Ni:0.80, Sb:0.005 | 100 | Invention Example |
| 49 | 0.10 | 3.1 | 0.1 | - | 0.02 | 0.02 | 0.03 | 0.0100 | Sb:0.005 | 90 | Invention Example |
| 50 | 0.10 | 3.1 | 0.1 | - | 0.02 | 0.02 | 0.03 | 0.0100 | Sb:0.01 | 100 | Invention Example |
| 51 | 0.10 | 3.1 | 0.1 | - | 0.02 | 0.02 | 0.03 | 0.0100 | Sb:0.10 | 100 | Invention Example |
| 52 | 0.10 | 3.1 | 0.1 | - | 0.02 | 0.02 | 0.03 | 0.0100 | Sb:0.20 | 85 | Invention Example |
| 53 | 0.10 | 3.1 | 0.1 | - | 0.02 | 0.02 | 0.03 | 0.0100 | Sb:0.005, Sn:0.005 | 95 | Invention Example |
| 54 | 0.10 | 3.1 | 0.1 | - | 0.02 | 0.02 | 0.03 | 0.0100 | Sn:0.005 | 80 | Invention Example |
| 55 | 0.10 | 3.1 | 0.1 | - | 0.02 | 0.02 | 0.03 | 0.0100 | Sn:0.01 | 100 | Invention Example |
| 56 | 0.10 | 3.1 | 0.1 | - | 0.02 | 0.02 | 0.03 | 0.0100 | Sn:0.50 | 100 | Invention Example |
| 57 | 0.10 | 3.1 | 0.1 | - | 0.02 | 0.02 | 0.03 | 0.0100 | Sn:0.80 | 90 | Invention Example |
| 58 | 0.10 | 3.1 | 0.1 | - | 0.02 | 0.02 | 0.03 | 0.0100 | Mo:0.005 | 75 | Invention Example |
| 59 | 0.10 | 3.1 | 0.1 | - | 0.02 | 0.02 | 0.03 | 0.0100 | Mo:0.01 | 95 | Invention Example |
| 60 | 0.10 | 3.1 | 0.1 | - | 0.02 | 0.02 | 0.03 | 0.0100 | Mo:0.50 | 95 | Invention Example |
| 61 | 0.10 | 3.1 | 0.1 | - | 0.02 | 0.02 | 0.03 | 0.0100 | Mo:0.80 | 85 | Invention Example |
| 62 | 0.10 | 3.1 | 0.1 | - | 0.02 | 0.02 | 0.03 | 0.0100 | Bi:0.0005 | 75 | Invention Example |
| 63 | 0.10 | 3.1 | 0.1 | - | 0.02 | 0.02 | 0.03 | 0.0100 | Bi:0.001 | 100 | Invention Example |
| 64 | 0.10 | 3.1 | 0.1 | - | 0.02 | 0.02 | 0.03 | 0.0100 | Bi:0.10 | 95 | Invention Example |
| 65 | 0.10 | 3.1 | 0.1 | - | 0.02 | 0.02 | 0.03 | 0.0100 | Bi:0.20 | 85 | Invention Example |
| 66 | 0.10 | 3.1 | 0.1 | - | 0.02 | 0.02 | 0.03 | 0.0100 | B:0.001 | 100 | Invention Example |
| 67 | 0.10 | 3.1 | 0.1 | - | 0.02 | 0.02 | 0.03 | 0.0100 | Ge:0.05 | 100 | Invention Example |
| 68 | 0.10 | 3.1 | 0.1 | - | 0.02 | 0.02 | 0.03 | 0.0100 | As:0.01 | 100 | Invention Example |
| 69 | 0.10 | 3.1 | 0.1 | - | 0.02 | 0.02 | 0.03 | 0.0100 | P:0.06 | 100 | Invention Example |
| 70 | 0.10 | 3.1 | 0.1 | - | 0.02 | 0.02 | 0.03 | 0.0100 | Te:0.005 | 100 | Invention Example |
| 71 | 0.10 | 3.1 | 0.1 | - | 0.02 | 0.02 | 0.03 | 0.0100 | Nb:0.01 | 100 | Invention Example |
| 72 | 0.10 | 3.1 | 0.1 | - | 0.02 | 0.02 | 0.03 | 0.0100 | Ti:0.01 | 100 | Invention Example |
| 73 | 0.10 | 3.1 | 0.1 | - | 0.02 | 0.02 | 0.03 | 0.0100 | V:0.02 | 100 | Invention Example |

| | | | | | | | | | | | |
|---|---|---|---|---|---|---|---|---|---|---|---|
| *: Non-defective ratio: ratio (%) of W17/50≤0.80 W/kg in product coil | | | | | | | | | | | |

Specimens for Epstein test are taken out from 20 places in a longitudinal direction of the thus obtained product coil at equal intervals and subjected to stress relief annealing in a nitrogen atmosphere at 800°C for 3 hours, and iron loss W_{17/50} is measured by Epstein test method to determine a ratio (%) of a portion having iron loss W_{17/50} of not more than 0.80 W/kg to the full length of the product coil. The measured results are also shown in Table 2. As seen from these results, grain-oriented electrical steel sheets with a low iron loss over a full length of a product coil can be produced by subjecting cold rolled sheets having a chemical composition adapted to the invention to primary recrystallization annealing under conditions adapted to the invention. Especially, when one or more selected from Cu, Ni, Cr, Sb, Sn, Mo and Bi having an inhibitor effect or further one or more selected from B, Ge, As, P, Te, Nb, Ti and V are added incrementally, product coils having a high ratio of iron loss W_{17/50} = 0.80 W/kg can be produced stably.

## Claims

1. A method for producing a grain-oriented electrical steel sheet by hot rolling a steel slab with a chemical composition consisting of C: 0.001 - 0.20 mass-%, Si: 1.0 - 5.0 mass-%, Mn: 0.03 - 1.0 mass-%, one or two of S and Se: 0.005-0.040 mass-% in total, sol. Al: 0.003 - 0.050 mass-%, N: 0.0010-0.020 mass-% and remainder being Fe and inevitable impurities, and optionally one or more selected from Cu: 0.01 - 0.5 mass-%, Ni: 0.01 - 1.0 mass-%, Cr: 0.01 - 1.0 mass-%, Sb: 0.01 - 0.3 mass%, Sn: 0.01 - 1.0 mass-%, Mo: 0.01 - 1.0 mass-% and Bi: 0.001 - 0.5 mass-%, and optionally one or more selected from B: 0.001 - 0.01 mass-%, Ge: 0.001 - 0.1 mass-%, As: 0.005 - 0.1 mass-%, P: 0.005 - 0.1 mass-%, Te: 0.005 - 0.1 mass-%, Nb: 0.005 - 0.1 mass-%, Ti: 0.005 - 0.1 mass-% and V: 0.005 - 0.1 mass-%, subjecting to a single cold rolling or two or more cold rollings with an intermediate annealing therebetween to a final thickness and to a primary recrystallization annealing, applying an annealing separator composed mainly of MgO and then subjecting to final annealing, **characterized in that** a heating rate S₁ at a zone of 500 - 600°C in a heating process of the primary recrystallization annealing is not less than 100°C/s and a heating rate S₂ at a zone of 600 - 700°C is in a range of 30 - (0.5 × S₁)°C/s, wherein an oxidation potential P_{H2O}/P_{H2} of an atmosphere at a zone of 500 - 700°C in the heating process of the primary recrystallization annealing is not more than 0.05.

## Patentansprüche

1. Verfahren zum Herstellen eines kornorientierten Elektrostahlblechs durch Warmwalzen einer Stahlbramme mit einer chemischen Zusammensetzung, bestehend aus: C: 0,001 bis 0,20 Massen-%, Si: 1,0 bis 5,0 Massen-%, Mn: 0,03 bis 1,0 Massen-%, einem oder zwei von S und Se: insgesamt 0,005 bis 0,040 Massen-%, sol. Al: 0,003 bis 0,050 Massen-%, N: 0,0010 bis 0,020 Massen-%, wobei es sich beim Rest um Fe und unvermeidliche Verunreinigungen handelt, und optional einem oder mehreren, ausgewählt aus Cu: 0,01 bis 0,5 Massen-%, Ni: 0,01 bis 1,0 Massen-%, Cr: 0,01 bis 1,0 Massen-%, Sb: 0,01 bis 0,3 Massen-%, Sn: 0,01 bis 1,0 Massen-%, Mo: 0,01 bis 1,0 Massen-% und Bi: 0,001 bis 0,5 Massen-%, und optional einem oder mehreren, ausgewählt aus B: 0,001 bis 0,01 Massen-%, Ge: 0,001 bis 0,1 Massen-%, As: 0,005 bis 0,1 Massen-%, P: 0,005 bis 0,1 Massen-%, Te: 0,005 bis 0,1 Massen-%, Nb: 0,005 bis 0,1 Massen-%, Ti: 0,005 bis 0,1 Massen-% und V: 0,005 bis 0,1 Massen-%, Ausführen eines einzigen Kaltwalzvorgangs oder von zwei oder mehr Kaltwalzvorgänge mit einem Zwischenglühen bis auf eine endgültige Dicke und eines primären Rekristallisationsglühens, Anwenden eines Glühseparators, der hauptsächlich aus MgO besteht, und anschließendes Ausführen eines Schlussglühens, **dadurch gekennzeichnet, dass** eine Erhitzungsrate S₁ in einer Zone von 500 bis 600°C in einem Erhitzungsprozess des primären Rekristallisationsglühens nicht weniger als 100 °C/s beträgt und eine Erhitzungsrate S₂ in einer Zone von 600 bis 700 °C in einem Bereich von 30 bis (0,5 × S₁) °C/s liegt, wobei ein Oxidationspotenzial P_{H2O}/P_{H2} einer Atmosphäre in einer Zone von 500 bis 700 °C im Erhitzungsprozess des primären Rekristallisationsglühens nicht mehr als 0,05 beträgt.

## Revendications

1. Procédé pour produire une tôle d'acier électrique à grains orientés, comprenant les étapes consistant à laminer à chaud une brame d'acier ayant une composition chimique consistant en : C : 0,001 à 0,20 % en masse, Si : 1,0 à 5,0 % en masse, Mn : 0,03 à 1,0 % en masse, un ou deux de S et Se : 0,005 à 0,040 % en masse au total, Al soluble : 0,003 à 0,050 % en masse, N : 0,0010 à 0,020 % en masse, et le reste étant du Fe et des impuretés inévitables, et facultativement un ou plusieurs composés choisis parmi Cu : 0,01 à 0,5 % en masse, Ni : 0,01 à 1,0 % en masse, Cr : 0,01 à 1,0 % en masse, Su : 0,01 à 0,3 % en masse, Sn : 0,01 à 1,0 % en masse, Mo : 0,01 à 1,0 % en masse et Bi : 0,001 à 0,5 % en masse, et facultativement un ou plusieurs choisi parmi B : 0,001 à 0,01 % en masse, Ge : 0,001 à 0,1 % en masse, As: 0,005 à 0,1 % en masse, P : 0,005 à 0,1 % en masse, Te : 0,005 à 0,1 % en masse, Nb : 0,005 à 0,1 % en masse, Ti : 0,005 à 0,1 % en masse et V : 0,005 à 0,1 % en masse, soumettre à un seul laminage à froid ou à deux laminages à froid ou plus avec un recuit intermédiaire entre eux jusqu'à une épaisseur finale et un recuit de recristallisation primaire, appliquer un séparateur de recuit composé principalement de MgO et ensuite soumettre à un recuit final, **caractérisé en ce qu'**une vitesse de chauffage S₁ dans une plage de 500 à 600°C dans un processus de chauffage du recuit de recristallisation primaire n'est pas inférieure à 100°C/s, et une vitesse de chauffage S₂ dans une plage de 600 à 700°C se situe dans une plage de 30 - (0,5 X S₁) °C/s, dans lequel un potentiel d'oxydation P_{H2O}/P_{H2} d'une atmosphère dans une plage de 500 à 700°C dans le processus de chauffage du recuit de recristallisation primaire n'est pas supérieur à 0,05.
